# EUROPEAN PATENT SPECIFICATION

(11) **EP 2 427 347 B1**
(45) Date of publication and mention of the grant of the patent: **08.10.2014**
(21) Application number: 10727972.1
(22) Date of filing: 27.04.2010
(51) Int. Cl.: B60P 1/43

(54) **RETRACTABLE LOADING/UNLOADING GANGWAY FOR TRANSPORTING MOTOR VEHICLES**
LADERAMPE FÜR FAHRZEUGE
RAMPE DE CHARGEMENT POUR VÉHICULES

(30) Priority: 06.05.2009 IT TO20090362
(43) Date of publication of application: 14.03.2012
(73) Proprietor: ROLFO S.p.A., 12042 Bra (Cuneo) (IT)
(72) Inventor: ARNULFO, Elio, 12042 Bra (CN) (IT)
(74) Representative: Garavelli, Paolo
(86) International application number: PCT/IT2010/000184
(87) International publication number: WO 2010/128533

(56) References cited:
- US-A- 4 527 941
- US-A- 4 571 144
- US-A- 5 306 113
- US-A- 6 099 233
- US-B1- 7 488 025

## Description

The present invention refers to a retractable loading/unloading gangway for transporting motor vehicles.

As known, the optimum load of motor vehicles on transporting trucks such as trailers constantly requires the seach for the minimum space that can be occupied and the best housing of motor vehicles themselves.

For such purpose, the prior art proposes loading gangways composed of a plurality of moving cross members sliding on support guides that can be extended to create a passage board to allow loading or unloading the motor vehicle on the trailer, to be then retracted to minimise the occupied space and to allow exploiting the free space that is created under the motor vehicle: in known gangways like the above-described ones, moving cross members are however mutually connected and spaced by flexible ribbons, that are scarcely reliable especially under frost or snow situations. Moreover, known retractable gangways composed of connected cross members, as described above, have relatively reduced tire-bearing surfaces, generating non-neglectable deformations on the tire carcass when passing on the gangway during the motor vehicle loading and unloading operations.

US-6 099 233 discloses a retractable loading/unloading gangway according to the preamble of claim 1.

Therefore, object of the present invention solving the above prior art problems, by providing a retractable loading/unloading gangway for transporting motor vehicles that can be retracted and minimised to allow exploiting the space that is created under the motor vehicle, in which every moving loading cross member is articulated to a following and adjacent moving cross member through rigid connecting tongues, thereby resulting more reliable than prior art retractable gangways.

Moreover, an object of the present invention is providing a retractable loading/unloading gangway for transporting motor vehicles that has a greater tire bearing surface, that induces lower deformation on the tire carcass when passing on the motor vehicle gangway.

The above and other objects and advantages of the invention, as will result from the following description, are obtained with a retractable loading/unloading gangway for transporting motor vehicles as described in Claim 1. Preferred embodiments and non-trivial variations of the present invention are the subject matter of the dependent claims.

It will be immediately obvious that numerous variations and modifications (for example related to shape, sizes, arrangements and parts with equivalent functionality) can be made to what is described, without departing from the scope of the invention, as claimed in the dependent claims.

The present invention will be better described by some preferred embodiments thereof, provided as a non-limiting example, with reference to the enclosed drawings, in which:
- FIG. 1 shows a perspective view of a preferred embodiment of the retractable loading/unloading gangway according to the present invention in an extended loading/unloading position thereof;
- FIG. 2 shows a detailed perspective view of some elements of the retractable loading/unloading gangway according to the present invention;
- FIG. 3 shows a side view of the retractable loading/unloading gangway according to the present invention in a partially extended position thereof;

- FIG. 4 shows a perspective detailed view of other components of the retractable loading/unloading gangway according to the present invention;
- FIG. 5 shows a perspective detailed view of further components of the retractable loading/unloading gangway according to the present invention; and
- FIG. 6 shows a perspective view of the retractable loading/unloading gangway according to the present invention in a rectracted position thereof.

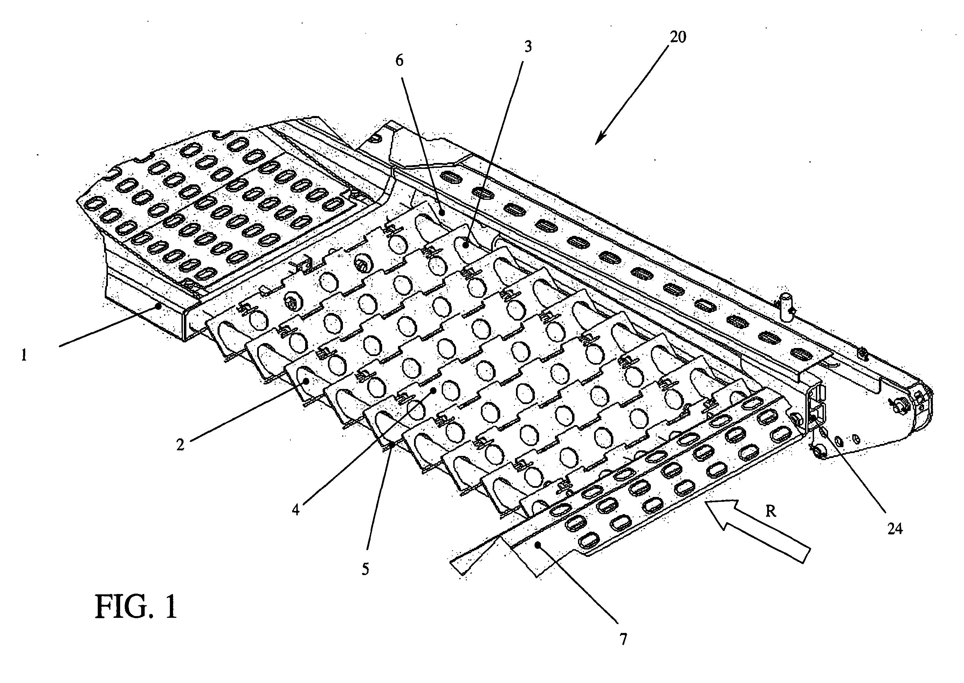

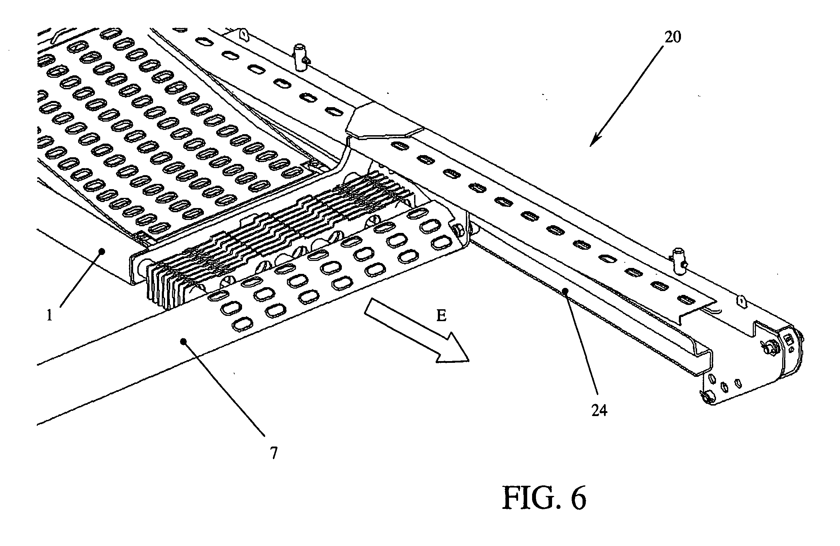

With reference to the Figures, it is possible to note that a preferred embodiment of the retractable loading/unloading gangway 20 for transporting motor vehicles according to the present invention comprises a plurality of moving loading cross members 4, 5 longitudinally sliding along supporting guides 2, 3 of a supporting frame 1 between a retracted position with minumum encumbrance (as shown, for example, in FIG. 6) and an extended loading position (as shown, for example, in FIG. 1) and vice versa, advantageously each one of such moving loading cross members 4 being articulated to a following and adjacent moving loading cross member 5 through at least one rigid connecting tongue 9.

As can be seen below in more detail, the gangway 20 as described above in its extended position allows the passage of the motor vehicle tire till its loading position, after which it is linearly retracted and compacted in order to free space below the motor vehicle itself.

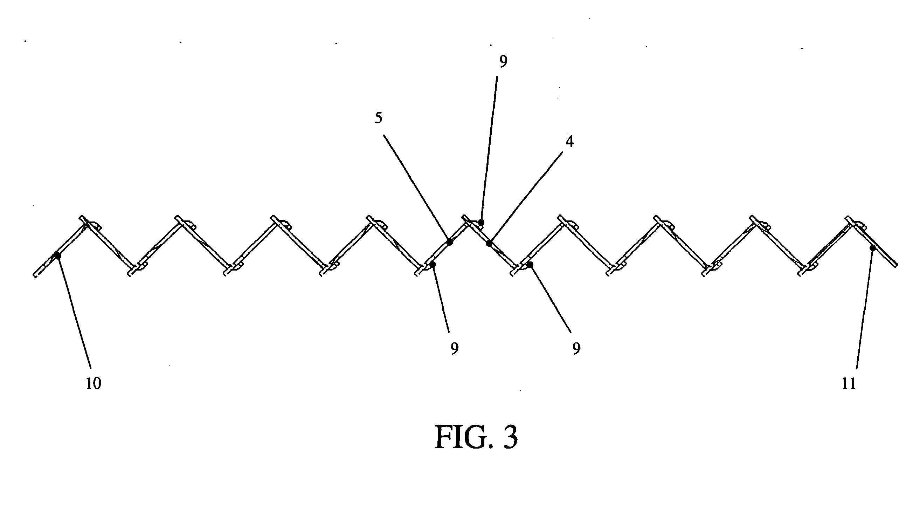

In particular, therefore, the gangway 20 according to the present invention is composed of moving rigid loading cross members 4, 5 mutually articulated in order to allow a certain mutual angular movement (as can be noted, for example, in FIG. 3), but without them being able to be freed one from the others due to the action of the rigid connecting tongues 9. The moving loading cross members 4, 5 are then supported at least by the two lateral supporting guides 2, 3 that allow their sliding between a retracted position with minimum encumbrance and the extended loading position, and vice versa, and are the longitudinal carrier structure of the gangway 20.

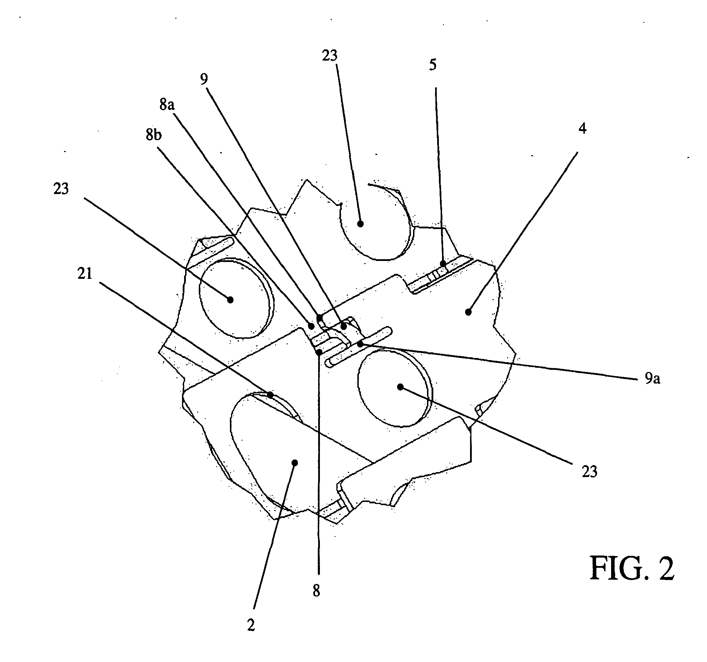

The arrangement of the articulation between a cross member 4 and a following cross member 5 through the rigid connecting tongues 9 allows the assembling without the help of tools or plastic deformations, but simply by inserting the various cross members 4, 5 mutually fastened along the two longitudinal guides 2, 3, preferably through respective slots 21, suitable sized and arranged at the end of each cross member 4, 5. In particular, as can be noted in FIG. 2, each rigid connecting tongue 9 of a cross member 4 engages a respective slot 8 of a following cross member 5, such slot 8 being suitably equipped with at least one abutment 8a that prevents the rigid connecting tongue 9 from accidentally going out of it through an insertion opening 8b of the tongue 9 itself inside such slot 8: always to prevent the rigid connecting tongue 9 from accidentally going out of its own slot 8, the end of such rigid connecting tongue 9 can be equipped with at least one "T"-shaped abutment 9a. Similarly, as can be noted in FIG. 3, the same type of connection occurs between the moving cross members 4, 5 also on their own lower sides. Obviously, the articulation made by the tongue 9 and the slot 8 can be repeated more than once between the various cross members 4, 5. Normally, two articulations are made between two cross members 4, 5, but they can be more than two. Advantageously, the length of the gangway 20 according to the present invention can be modified at will depending on the number of cross members 4, 5, mutually articulated and modularly alternated.

Obviously, each moving loading cross member 4, 5 is structurally adapted to support the motor vehicle load and is of the transversally carrier type, discharging the forces on the side guides 2, 3.

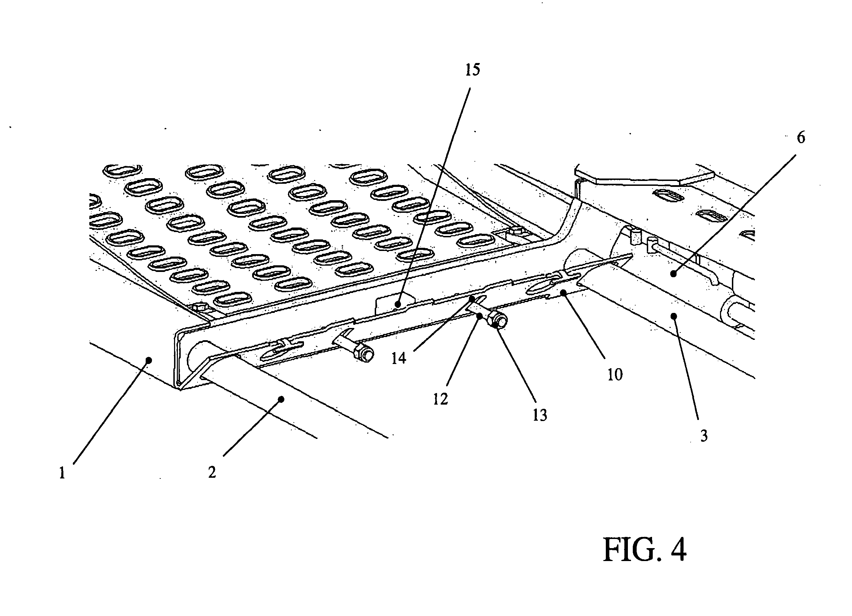

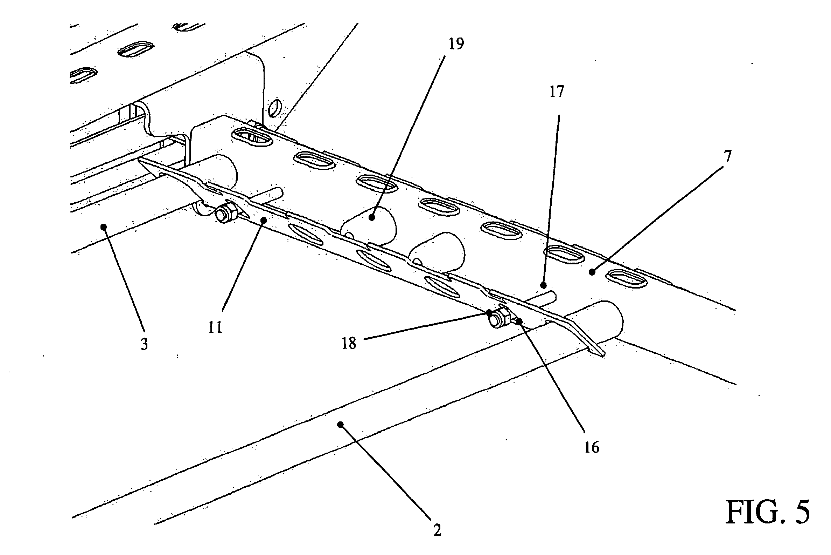

The plurality of moving loading cross members 4, 5 comprise a particular first end cross member 10 connected to the supporting frame 1 and a second end cross member 11 connected to at least one terminal cross member 7 of the gangway 20: preferably, as can be noted in particular in FIG. 4, the first end cross member 10 is connected to the supporting frame 1 through first pins 12 that engage respective first slots 14 of the cross member 10 itself, each first pin 12 being equipped with a stop 13 that prevents the pin 12 from accidentally going out of its own slot 14. In parallel, as can be noted in particular in FIG. 5, the second end cross member 11 is connected to the terminal cross member 7 through second pins 17 that engage respective second slots 16 of the cross member 11, each second pin 17 being equipped with a stop 18 that prevents the pin 17 itself from accidentally going out of its own slot 16.

To avoid vibrations and rattling of moving cross members 4, 5 during an on-road running, it is possible to provide that, between the supporting frame 1 and the first end cross member 10, first elastic, rubber anti-vibration elements 15 are interposed, preferably fastened to the supporting frame 1 itself, and between the terminal cross member 7 and the second end cross member 11 second elastic, rubber anti-vibration elements 10 are interposed, preferably secured to the terminal cross member 7 itself.

The terminal cross member 7 is moved along a respective side sliding guide 24 of the supporting frame 1, for example by a linear actuator 6 or manually, in order to slide the moving loading cross members 4, 5 along the supporting guides 2, 3 according to a first direction (as shown, for example, by arrow E in FIG. 6) to take the gangway 1 from its retracted position with minimum encumbrance to its extended loading position, or according to a second direction (as shown, for example, by arrow R in FIG. 1) to take the gangway 1 from its extended loading position to its retracted position with minimum encumbrance. Preferably, the same side supporting guides 2, 3 are sliding inside the supporting frame 1 under the action of the movement of the terminal cross member 7, an end of each of such supporting guides 2, 3 being connected to such terminal cross member 7.

By taking the terminal cross member 7 to move according to the direction of arrow E, namely moving the terminal cross member 7 away from the supporting frame 1, the sliding side supporting guides 2, 3 are extracted from the supporting frame 1 and the various moving loading cross members 4, 5, mutually articulated through the rigid connecting tongues 9, are deployed, increasing the angle between the cross members 4, 5 and a vertical transverse plane, in order to make a board for passing the motor vehicle. Obviously, by taking the terminal cross member 7 to move according to the direction of arrow R, namely by approaching the terminal cross member 7 to the supporting frame 1, the sliding side supporting guides 2, 3 are taken again inside the supporting frame 1 and the various moving loading cross members 4, 5 are bent, decreasing the angle between the cross members 4, 5 and taking the gangway to its retracted position with minimum encumbrance.

Preferably, the upper surface of each moving loading cross member 4, 5 can be equipped with an indentation adapted to provide a greater adherence for motor vehicle tires and/or with through holes 23 that perform the double function of lightening and allowing dumping water, snow or mud through the gangway 1.

## Claims

1. Retractable loading/unloading gangway (20) for transporting motor vehicles comprising a plurality of moving loading cross members (4, 5) longitudinally sliding along supporting guides (2, 3) of a supporting frame (1) between a retracted position with minimum encumbrance and a loading extended position and vice versa, **characterised in that** each loading moving cross member (4) is articulated to a following and adjacent loading moving cross member (5) by means of at least one rigid connecting tongue (9).

2. Retractable loading/unloading gangway (20) according to claim 1, **characterised in that** each rigid connecting tongue (9) of one of said cross members (4) engages one respective slot (8) of one following cross member (5).

3. Retractable loading/unloading gangway (20) according to claim 2, **characterised in that** said slot (8) is provided with at least one abutment (8a) adapted to avoid the coming out of said rigid connecting tongue (9) through one inserting opening (8b) of said tongue (9) inside said slot (8).

4. Retractable loading/unloading gangway (20) according to claim 2, **characterised in that** one end of said rigid connecting tongue (9) is provided with at least one "T"-shaped abutment (9a).

5. Retractable loading/unloading gangway (20) according to claim 1, **characterised in that** said plurality of said loading moving cross members (4, 5) comprise one first end cross member (10) connected to said supporting frame (1) and one second end cross member (11) connected to at least one terminal cross member (7).

6. Retractable loading/unloading gangway (20) according to claim 5, **characterised in that** said first end cross member (10) is connected to said supporting frame (1) by means of first pins (12) which engage respective first slots (14) of said cross member (10), each first pin (12) being provided with one stop (13), and said second end cross member (11) is connected to said terminal cross member (7) by means of second pins (17) which engage respective second slots (16) of said cross member (11), each second pin (17) being provided with one stop (18).

7. Retractable loading/unloading gangway (20) according to claim 5, **characterised in that** first rubber elastic anti-vibration elements (15) are interposed between said supporting frame (1) and said first end cross member (10) and second rubber elastic anti-vibration elements (19) are interposed between said terminal cross member (7) and said second end cross member (11).

8. Retractable loading/unloading gangway (20) according to claim 6, **characterised in that** said terminal cross member (7) is moved (E, R) along one respective side sliding guide (24) of said supporting frame (1) by one linear actuator (6) or manually to make said loading moving cross members (4, 5) slide along said supporting guides (2, 3).

9. Retractable loading/unloading gangway (20) according to claim 8, **characterised in that** said side supporting guides (2, 3) slide inside said supporting frame (1) under the action of said movement (E, R) of said terminal cross member (7), one end of each of said supporting guides (2, 3) being connected to said terminal cross member (7).

10. Retractable loading/unloading gangway (20) according to claim 1, **characterised in that** one upper surface of each said loading moving cross member (4, 5) is provided with an indentation adapted to provide a greater adherence for the tires of said motor vehicle and/or passing holes (23) adapted to provide a lightening and to allow dumping water, snow or mud through said gangway (1).

## Patentansprüche

1. Einziehbare Be-/Entladerampe (20) für den Transport von Fahrzeugen mit mehreren mobilen Ladetraversen (4, 5), die längs der Trägerführungen (2, 3) eines Trägerrahmens (1) zwischen einer eingezogenen Position mit minimalen Abmessungen und einer erweiterten Ladeposition und umgekehrt verschiebbar sind, und die **dadurch gekennzeichnet ist, dass** jede mobile Ladetraverse (4) mit einem Gelenk mit einer folgenden und daneben liegenden Ladetraverse (5) durch mindestens eine feste Anschlussfahne (9) verbunden ist.

2. Einziehbare Be-/Entladerampe (20) gemäß Patentanspruch 1, die **dadurch gekennzeichnet ist, dass** jede feste Anschlussfahne (9) von einer der genannten Traversen (4) die entsprechende Öse (8) einer folgenden Traverse (5) spannt.

3. Einziehbare Be-/Entladerampe (20) gemäß Patentanspruch 2, die **dadurch gekennzeichnet ist, dass** die genannte Öse (8) mit mindestens einem Anschlag (8a) ausgestattet ist, der dazu dient, ein Austreten der genannten festen Anschlussfahne (9) durch eine Einsetzöffnung (8b) der genannten Fahne (9) im Inneren der genannten Öse (8) zu verhindern.

4. Einziehbare Be-/Entladerampe (20) gemäß Patentanspruch 2, die **dadurch gekennzeichnet ist, dass** ein Ende der genannten festen Anschlussfahne (9) mit mindestens einem "T" -Anschlag (9a) ausgestattet ist.

5. Einziehbare Be-/Entladerampe (20) gemäß Patentanspruch 1, die **dadurch gekennzeichnet ist, dass** die genannten mehreren mobilen Ladetraversen (4, 5) eine erste Endtraverse (10), die mit dem genannten Trägerrahmen (1) verbunden ist, und eine zweite Endtraverse (11), die mit mindestens einer Endtraverse (7) verbunden ist, einschließen.

6. Einziehbare Be-/Entladerampe (20) gemäß Patentanspruch 5, die **dadurch gekennzeichnet ist, dass** die genannte erste Endtraverse (10) mit dem genannten Trägerrahmen (1) durch erste Bolzen (12) verbunden ist, die entsprechende erste Ösen (14) dieser genannten Traverse (10) spannen, jeder genannte erste Bolzen (12) ist mit einem Endanschlag (13) ausgestattet, und dass die genannte zweite Endtraverse (11) mit der genannten Endtraverse (7) durch zweite Bolzen (17) verbunden ist, die entsprechende zweite Ösen (16) der genannten Traverse (11) spannen, jeder genannte zweite Bolzen (17) ist mit einem Endanschlag (18) ausgestattet.

7. Einziehbare Be-/Entladerampe (20) gemäß Patentanspruch 5, die **dadurch gekennzeichnet ist, dass** zwischen dem genannten Trägerrahmen (1) und der genannten ersten Endtraverse (10) erste elastische Antivibrationselemente (15) aus Gummi und zwischen der genannten Endtraverse (7) und der genannten zweiten Endtraverse (11) zweite elastische Antivibrationselemente (19) aus Gummi angebracht wurden.

8. Einziehbare Be-/Entladerampe (20) gemäß Patentanspruch 6, die **dadurch gekennzeichnet ist, dass** die genannte Endtraverse (7) längs einer entsprechenden seitlichen Führung (24) des genannten Trägerrahmens (1) durch einen linearen Antrieb (6) oder manuell bewegt wird (E, R), um die genannten mobilen Ladetraversen (4, 5) längs den genannten Trägerführungen (2, 3) zu verschieben.

9. Einziehbare Be-/Entladerampe (20) gemäß Patentanspruch 8, die **dadurch gekennzeichnet ist, dass** die genannten seitlichen Trägerführungen (2, 3) im Inneren des genannten Trägerrahmens (1) durch die Wirkung der genannten Bewegung (E, R) der genannten Endtraverse (7) verschiebbar sind, ein Ende jeder der genannten Trägerführungen (2, 3) ist mit der genannten Endtraverse (7) verbunden.

10. Einziehbare Be-/Entladerampe (20) gemäß Patentanspruch 1, die **dadurch gekennzeichnet ist, dass** eine höhere Oberfläche jeder genannten mobilen Ladetraverse (4, 5) mit einer Verzahnung, die dazu dient, eine bessere Haftung der Reifen jedes Fahrzeuges zu bieten, und/oder mit durchgehenden Bohrungen (23), die dazu dienen, eine Erleichterung zu bieten und den Abfluss von Wasser, Schnee oder Schlamm durch die genannte Fahrrampe (1) zu ermöglichen, ausgestattet ist.

## Revendications

1. Voie de chargement/déchargement rétractable (20) pour le transport de véhicules composée de plusieurs traverses de chargement mobiles (4, 5), coulissant longitudinalement le long du guide de support (2, 3) d'un châssis de soutien (1) entre une position escamotée à encombrement minimum et une position de chargement étendue et inversement, dont chaque traverse mobile de chargement (4) est reliée à la traverse mobile de chargement (5) suivante adjacente par une languette rigide de connexion (9) au moins.

2. Voie de chargement/déchargement rétractable (20), selon la revendication 1, dont chaque languette rigide de connexion (9) des traverses (4) occupe l'orifice relatif (8) de la traverse (5) suivante.

3. Voie de chargement/déchargement rétractable (20), selon la revendication 2, dont l'orifice (8) est doté d'une butée (8a) au moins empêchant que la languette rigide de connexion (9) sorte à travers l'ouverture d'introduction (8b) de la languette (9) à l'intérieur de l'orifice (8).

4. Voie de chargement/déchargement rétractable (20), selon la revendication 2, dont une extrémité de la languette rigide de connexion (9) est dotée d'une butée en "T" (9a) au moins.

5. Voie de chargement/déchargement rétractable (20), selon la revendication 1, dont le groupe de traverses mobiles de chargement (4, 5) comprend au moins une première traverse d'extrémité (10) qui est reliée au châssis de soutien (1) et une seconde traverse d'extrémité (11) qui est reliée à une traverse terminale (7).

6. Voie de chargement/déchargement rétractable (20), selon la revendication 5, dont la première traverse d'extrémité (10) est reliée au châssis de soutien (1) par des goujons (12) insérés dans les orifices (14) de la traverse (10), chaque goujon (12) est doté d'une fin de course (13), et dont la seconde traverse d'extrémité (11) est reliée à la traverse terminale (7) par des goujons (17) insérés dans les orifices (16) de la traverse (11), chaque goujon (17) est doté d'une fin de course (18).

7. Voie de chargement/déchargement rétractable (20), selon la revendication 5, où entre le châssis de soutien (1) et la première traverse d'extrémité (10) sont interposés des éléments antivibration (15) élastiques en caoutchouc et où, entre la traverse terminale (7) et la seconde traverse d'extrémité (11), sont interposés des éléments antivibration (19) élastiques en caoutchouc.

8. Voie de chargement/déchargement rétractable (20), selon la revendication 6, dont la traverse terminale (7) est mise en mouvement (E, R) le long du guide latéral coulissant (24) du support (1) à travers un actionneur linéaire (6) ou bien manuellement pour faire glisser les traverses mobiles de chargement (4, 5) le long des guides de support (2, 3).

9. Voie de chargement/déchargement rétractable (20), selon la revendication 8, dont les guides de support latéraux (2, 3) coulissent à l'intérieur du châssis de support (1) en suivant le mouvement (E, R) de la traverse terminale (7) parce qu'une extrémité de chaque guide de support (2, 3) est reliée à la traverse terminale (7).

10. Voie de chargement/déchargement rétractable (20), selon la revendication 1, dont la surface supérieure de chaque traverse mobile de chargement (4, 5) est dotée d'une dentelure assurant une plus grande adhérence des pneus du véhicule et/ou est dotée de trous passants (23) pour alléger la voie et permettre l'évacuation de l'eau, de la neige ou de la boue de la surface de la voie (1).
